# EUROPÄISCHE PATENTSCHRIFT

(11) **EP 1 981 798 B1**
(45) Veröffentlichungstag und Bekanntmachung des Hinweises auf die Patenterteilung: **09.12.2009**
(21) Anmeldenummer: 06841006.7
(22) Anmeldetag: 16.12.2006
(51) Int. Cl.: B66C 13/12, H02G 11/00

(54) **LEITUNGSWAGEN ZUM VERFAHREN LÄNGS EINER TRAGSCHIENE**
CABLE OR PIPELINE TROLLEY FOR TRAVELLING ALONG A CARRIER RAIL
CHARIOT À LIGNES OU CANALISATIONS CONÇU POUR ÊTRE DÉPLACÉ LE LONG D'UN RAIL DE SUPPORT

(30) Priorität: 02.02.2006 DE 102006004722
(43) Veröffentlichungstag der Anmeldung: 22.10.2008
(73) Patentinhaber: Conductix-Wampfler AG, 79576 Weil am Rhein-Märkt (DE)
(72) Erfinder: MAIER, Bernd, 79418 Schliengen (DE)
(74) Vertreter: Charrier, Rapp & Liebau
(86) Internationale Anmeldenummer: PCT/EP2006/012153
(87) Internationale Veröffentlichungsnummer: WO 2007/087873

(56) Entgegenhaltungen:
- DE-A1- 4 436 519
- DE-C1- 4 436 520
- US-A1- 6 109 199

## Beschreibung

Die Erfindung betrifft einen Leitungswagen zum Verfahren längs einer Tragschiene nach dem Obergegriffs des Anspruchs 1.

Bekannte derartige Leitungswagen sind beispielsweise Gegenstand der Druckschriften DE 44 36 520 C1, welche einen angetriebenen Leitungswagen beschreibt, und DE 44 36 519 C2 sowie der darin in Bezug genommenen Schriften DE-GM 71 14 492 und DE 26 28 112 C2. Die Druckschrift DE 44 36 520 C1 beschreibt einen Leitungswagen nach dem Oberbegriff des unabhangigen Anspruchs 1.

Die dort beschriebenen und gattungsgemäßen Leitungswagen dienen dem Transport von Elektrizitäts- und/oder Gasleitungen zu beweglichen Abnehmern, z. B. also zu der auf einer Tragschiene verlaufenden Laufkatze eines Krans oder in beliebigen anderen Anordnungen, z. B. Schleppleitungsanordnungen. Hierbei müssen die Strom- oder Gasleitungen einen beweglichen Verbrauch nachgeführt werden, was durch eine Vielzahl solcher Leitungswagen geschieht, die gleichermaßen wie der Endverbrauch (also z. B. die Krankatze) auf einer Tragschiene ablaufen.

Bekannte derartige Leitungswagen bestehen in der Regel aus mindestens einem unmittelbar an der Tragschiene angeordneten und darauf ablaufenden Fahrwerk, einem zentralen Mittelblech welches hängend an dem Fahrwerk angeordnet ist und der eigentlichen Tragvorrichtung für die Leitungen, welche unten an dem zentralen Mittelblech angeordnet ist. Bei diesem bekannten Tragvorrichtungen besteht der Nachteil, dass sie bei starken Winden, wie sie bei hoch angeordneten Schleppleitungsvorrichtungen, z. B. an Brückenkränen in Küstengebieten häufig auftreten, seitlich verkanten, da das sehr steife Mittelblech auf der einen Seite eine rohe Angriffsfläche für den Wind bietet und zum anderen sich kaum durchbiegen lässt, also nur eine sehr geringe Flexibilität aufweist. Damit geraten die Fahrwerke aus den Führungen. Auf Grund der Fixierung links und rechts entlang des DoppelT-förmigen Trägers, auch als I-Träger bezeichnet, kann der Leitungswagen zwar nicht herausfallen, aber blockieren, was zu einem Auffahren benachbarter Leitungswagen führen kann.

Es besteht daher die Aufgabe, einen gattungsgemäßen Leitungswagen so weiter zu bilden, dass er betriebssicherer ist und die Fahrwerke zuverlässiger auch bei Windlasten und anderen Belastungen auf der Tragschiene ablaufen können.
Gelöst wird diese Aufgabe mit den kennzeichnenden Merkmalen des Anspruchs 1. Vorteilhafte Ausgestaltungen sind den Unteransprüchen entnehmbar.

Ein Ausführungsbeispiel der Erfindung wird im folgenden unter Bezugnahme auf die begleitenden Zeichnungen näher erläutert, welche zeigen:
- **Fig. 1:**: eine Seitenansicht eines erfindungsgemäßen Leitungswagens;
- **Fig. 2:**: eine Ansicht des in Figur 1 dargestellten Leitungswagens von vom;
- **Fig. 3:**: eine Ansicht des in den Figuren 1 und 2 dargestellten Leitungswagens von oben;
- **Fig. 4:**: eine isolierte Darstellung des Mittelblechs, wie es im Leitungswagen gemäß Figuren 1 bis 3 verwendet wird.

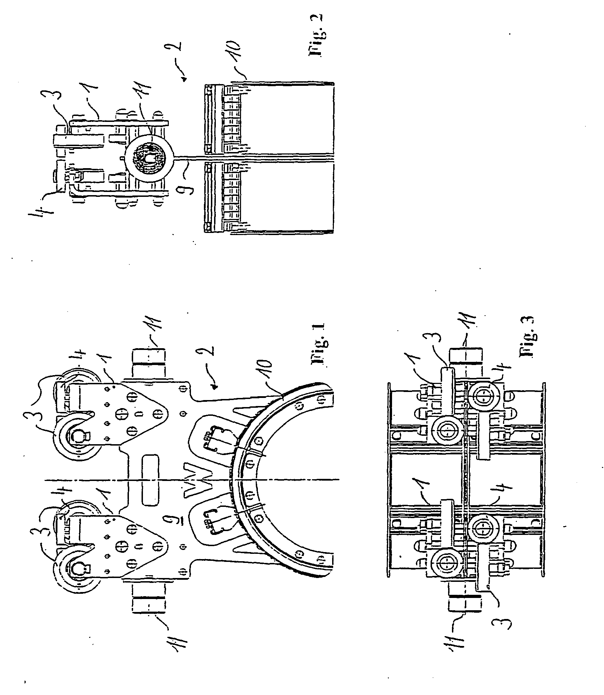

In den Figuren 1 bis 3 ist ein Leitungswagen dargestellt, der an seiner Oberseite zwei Fahrwerke (1) aufweist, die über Schraubverbindungen mit einem im wesentlichen planaren Mittelblech (9) verbunden sind und dieses hängend lagern, wobei das Mittelblech an seiner unteren Seite ebenfalls über Schraubverbindungen mit der eigentlichen Tragvorrichtung (10) für die (nicht dargestellten) zuführenden Leitungen verbunden ist. Jedes Fahrwerk (1) weist zwei Tragrollen (3) mit dem wesentlichen horizontaler Drehachse und zwei Führungsrollen (4) mit im wesentlichen vertikaler Drehachse auf. An den in Fahrtrichtung gesehen vorderen und hinteren Enden des Mittelblechs (9) befinden sich Zellpuffer (11) zum gegenseitigen Abstützen und zur Stoßdämpfung, falls benachbarte Leitungswagen (2) aufeinander stoßen.

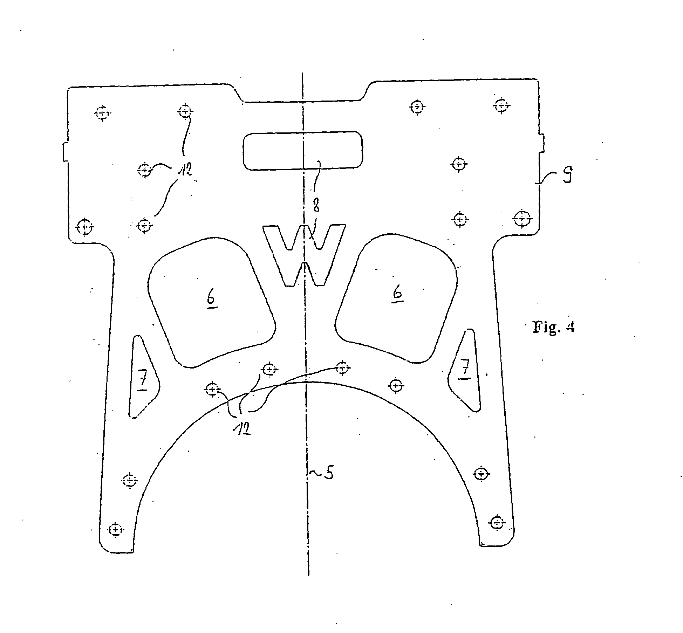

Das Mittelblech (9) ist in Figur 4 isoliert und in ausgebautem Zustand dargestellt. Es weist im Unterschied zu den aus dem Stand der Technik bekannten Mittelblechen eine Reihe von Ausnehmungen (6,7 und 8) auf, welche insgesamt mindestens 10% seiner Fläche ausmachen. Deutlich sichtbar sind neben der Mittelachse (5) des Mittelblechs (9) und symmetrisch zu dieser angeordnete große Ausnehmungen (6), welche im wesentlichen rechteckig (fast quadratisch) ausgebildet sind und abgerundete Ecken aufweisen. Diese beiden großen Ausnehmungen (6) sind bezüglich der Mittelachse (5) symmetrisch angeordnet, und zwar, von der Unterseite des Mittelblechs (9) zu seiner Oberseite gesehen und bezüglich der Mittelachse (5) nach außen gekippt. An der Außenseite dieser beiden größeren Ausnehmungen (6) und in Richtung nach unten, also auf die Tragvorrichtung (10) zu sind zwei kleinere, ebenfalls bezüglich der Mittelachse (5) symmetrisch angeordnete Ausnehmungen (7) vorgesehen, die im wesentlichen dreieckig sind.

Zwischen den beiden größeren Ausnehmungen (6) befindet sich eine W-förmige Ausnehmung und oberhalb dieser, also den Fahrwerken (1) zuordnet eine längliche rechteckige Ausnehmung. Die letzten beiden Ausnehmungen tragen die Bezugszahl 8. Sie sind ebenfalls symmetrisch bezüglich der Mittelachse (5) und werden von dieser geschnitten. Die längliche, rechteckige Ausnehmung mit der Bezugszahl 8 dient auch der Aufnahme einer (nicht dargestellten) Anhebevorrichtung. Bei einem notwendigen Austausch der Tragrollen 3 kann durch eine solche Anhebevorrichtung (z.B. eine hydraulische Hubvorrichtung) der komplette Leitungswagen 2 angehoben werden. Hierdurch können die Tragrollen 3 entlastet und ohne Demontage des Seitenschildes ausgetauscht werden, was in der Praxis einen erheblichen Vorteil auf Grund der erzielten Zeitersparnis bedeutet:

Durch die Vielzahl der Ausnehmungen (6, 7 und 8) und den geringen verbleibenden Blechanteil, ausgenommen in den Bereichen in denen sich Schraubverbindungen (12) zur Verbindung des Mittelblechs (9) mit der Tragvorrichtung (10) bzw. den Fahrwerken (1) befinden, ist nur noch relativ wenig Material vorhanden, welches eine Angriffsfläche für Wind bieten bzw. eine zu hohe Steifheit des Mittelblechs (9) bewirken würde. Der Wind kann also im wesentlichen ungehindert durch das mit Ausnehmungen versehene Mittelblech (9) hindurch treten. Selbst wenn das Mittelblech (9) jedoch durch Windkräfte oder andere, in seinem Betrieb entstehende Kräfte zu einer Biegung gebracht wird, widersetzt es sich dieser nicht, sondern biegt sich federnd durch, so dass nicht die gesamte, auf das Mittelblech (9) wirkende Kraft auf die Fahrwerke (1) übertragen wird und die Tragrollen (3) auch bei Kräftebelastung des Mittelblechs (9) länger in der Spur bleiben und die Fahrwerke (1) damit sauberer abrollen.

Durch den verbesserten und kontrollierteren Kraftfluss werden die Auflagen entlastet, durch die Gewichtsreduktion auf Grund der zahlreichen Ausnehmungen (6, 7 und 8) ergeben sich auch geringere Laufgeräusche.

## Patentansprüche

1. Leitungswagen (2) zum Verfahren längs einer Tragschiene, mit mindestens einem Fahrwerk (1) und mit einer Tragvorrichtung (10) für Leitungen sowie einem die Tragvorrichtung (10) mit dem Fahrwerk (1) verbindenden Mittelblech (9), wobei innerhalb der äußeren Umrandung des Mittelblechs (9) mindestens zwei rechteckförmige Ausnehmungen (6) symmetrisch bezüglich der Mittelachse des Mittelblechs (9) angeordnet sowie durch einen Steg getrennt sind, **dadurch gekennzeichnet, dass** innerhalb der äußeren Umrandung des Mittelblechs (9) zusätzlich mindestens zwei dreieckförmige Ausnehmungen (7) symmetrisch bezüglich der Mittelachse des Mittelblechs (9) angeordnet sind.

2. Leitungswagen (2) nach Anspruch 1, **dadurch gekennzeichnet, dass** die beiden inneren rechteckförmigen Ausnehmungen (6) größer sind als die beiden äußeren dreieckförmigen Ausnehmungen (7).

3. Leitungswagen (2) nach einem der voranstehenden Ansprüche, **dadurch gekennzeichnet, dass** die beiden rechteckförmigen Ausnehmungen (6) im Wesentlichen quadratisch mit abgerundeten Ecken sind.

4. Leitungswagen (2) nach einem der voranstehenden Ansprüche, **dadurch gekennzeichnet, dass** das Mittelblech (9) insgesamt sechs Ausnehmungen (6,7,8) aufweist, die zu einander symmetrisch bezüglich der Mittelachse (5) des Mittelblechs (9) angeordnet sind und von denen zwei von dieser Mittelachse (5) geschnitten werden.

## Claims

1. Cable/line trolley (2) for travelling along a carrier rail, with at least one travelling unit (1) and with a carrier device (10) for cables/lines and a centre plate (9) connecting the carrier device (10) to the travelling unit (1), wherein at least two rectangular openings (6) are arranged inside the outer edge of the centre plate (9) symmetrically in relation to the centre line of the centre plate (9) and separated by a web, **characterised in that** in addition at least two triangular openings (7) are arranged inside the outer edge of the centre plate (9) symmetrically in relation to the centre line of the centre plate (9).

2. Cable/line trolley (2) according to claim 1, **characterised in that** the two rectangular openings (6) are larger than the two outer triangular openings (7).

3. Cable/line trolley (2) according to one of the preceding claims, **characterised in that** the two rectangular openings (6) are essentially square with rounded corners.

4. Cable/line trolley (2) according to one of the preceding claims, **characterised in that** the centre plate (9) exhibits a total of six openings (6, 7, 8) which are arranged symmetrically to one another in relation to the centre line (5) of the centre plate (9) and two of which are intersected by this centre line (5).

## Revendications

1. Chariot à lignes (2) destiné à être déplacé le long d'un rail support, avec au moins un châssis (1) et avec un dispositif support (10) pour lignes ainsi qu'une tôle moyenne (9) reliant le dispositif support (10) au châssis (1), au moins deux évidements rectangulaires (6) étant agencés à l'intérieur du bord extérieur de la tôle moyenne (9) de manière symétrique par rapport à l'axe médian de la tôle moyenne (9) et séparés par une entretoise, **caractérisé en ce qu'**au moins deux évidements triangulaires (7) sont agencés en plus à l'intérieur du bord extérieur de la tôle moyenne (9) de manière symétrique par rapport à l'axe médian de la tôle moyenne (9).

2. Chariot à lignes (2) selon la revendication 1, **caractérisé en ce que** les deux évidements rectangulaires (6) sont plus grands que les deux évidements triangulaires extérieurs (7).

3. Chariot à lignes (2) selon l'une quelconque des revendications précédentes, **caractérisé en ce que** les deux évidements rectangulaires (6) sont essentiellement carrés à coins arrondis.

4. Chariot à lignes (2) selon l'une quelconque des revendications précédentes, **caractérisé en ce que** la tôle moyenne (9) présente un total de six évidements (6, 7, 8), qui sont agencés de manière symétrique l'un par rapport à l'autre par rapport à l'axe médian (5) de la tôle moyenne (9) et dont deux sont coupés par cet axe médian (5).
